# FASCICULE DE BREVET EUROPEEN

(11) **EP 2 185 413 B1**
(45) Date de publication et mention de la délivrance du brevet: **02.02.2011**
(21) Numéro de dépôt: 08787416.0
(22) Date de dépôt: 22.08.2008
(51) Int. Cl.: B64D 27/18, B64D 27/26

(54) **BERCEAU DE SUPPORT DE CAPOT DE SOUFFLANTE MONTE SUR LE MÂT D'ACCROCHAGE ET SUR L'ENTREE D'AIR DE LA NACELLE**
AN DER BEFESTIGUNGSTRIEBWERKSAUFHÄNGUNG UND AM GONDELLUFTEINLASS ANGEBRACHTES GESTELL ZUM HALTEN EINES FAN-COILS
CRADLE FOR HOLDING A FAN COIL MOUNTED ON THE ATTACHMENT PYLON AND ON THE NACELLE AIR INTAKE

(30) Priorité: 27.08.2007 FR 0757189
(43) Date de publication de la demande: 19.05.2010
(73) Titulaire: AIRBUS OPERATIONS, 31060 Toulouse (FR)
(72) Inventeur: DUSSOL, Loic, F-31100 Toulouse (FR); RIDRAY, Frédéric, F-32600 L'isle Jourdain (FR)
(74) Mandataire: Ilgart, Jean-Christophe
(86) Numéro de dépôt international: PCT/EP2008/061015
(87) Numéro de publication internationale: WO 2009/027336

(56) Documents cités:
- EP-A- 0 453 360
- FR-A- 2 891 526
- FR-A- 2 903 665
- US-A- 4 458 863

## Description

### DOMAINE TECHNIQUE

La présente invention se rapporte de façon générale à un ensemble moteur pour aéronef comprenant un moteur, un dispositif d'accrochage du moteur ainsi qu'une nacelle entourant le moteur et pourvue de capots de soufflante ainsi que d'une entrée d'air, le dispositif d'accrochage précité comportant une structure rigide ainsi qu'une structure aérodynamique avant sur laquelle les capots de soufflante sont articulés.

Ce type de dispositif d'accrochage, également appelé mât d'accrochage ou « EMS » (de l'anglais « Engine Mounting Structure »), permet globalement de suspendre un moteur tel qu'un turboréacteur au-dessous de la voilure de l'aéronef, ou bien de monter ce moteur au-dessus de cette même voilure, voire encore d'assembler ce moteur sur une partie arrière de fuselage de l'aéronef.

### ETAT DE LA TECHNIQUE ANTERIEURE

Un tel dispositif d'accrochage est en effet prévu pour constituer l'interface de liaison entre un moteur et une voilure de l'aéronef. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide également dénommée structure primaire, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif d'accrochage est muni de moyens d'accrochage interposés entre le moteur et la structure rigide, ces moyens comportant globalement deux attaches moteur, ainsi qu'un dispositif de reprise des efforts de poussée générés par le moteur. Dans l'art antérieur, ce dispositif de reprise comprend habituellement deux bielles latérales raccordées d'une part à un carter du moteur tel que le carter de soufflante ou le carter intermédiaire, et d'autre part à une attache moteur arrière fixée sur le carter central ou le carter d'éjection de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Par ailleurs, le mât est pourvu d'une pluralité de structures secondaires assurant notamment la ségrégation et le maintien des systèmes tout en supportant des éléments de carénage aérodynamique, ces derniers prenant généralement la forme de panneaux ou capotages intégrés à ces mêmes structures. De façon connue de l'homme du métier, les structures secondaires se différencient de la structure rigide, également dénommée structure primaire, par le fait qu'elles ne sont pas destinées à assurer le transfert des efforts provenant du moteur et devant être transmis vers la voilure de l'aéronef.

Parmi les structures secondaires, on compte une structure aérodynamique avant située à l'avant de la structure rigide du mât d'accrochage, cette structure aérodynamique avant disposant non seulement d'une fonction de carénage aérodynamique, mais permettant également la mise en place, la ségrégation et le cheminement de différents systèmes (air, électrique, hydraulique, carburant). De plus, cette structure aérodynamique avant porte les capots de soufflante du moteur associé, tandis que les capots d'inverseur de poussée sont quant à eux généralement portés par la structure rigide du mât d'accrochage.

Dans les solutions de l'art antérieur comme dans le document EP0453360, la structure aérodynamique avant comporte généralement un berceau revêtu d'un capotage aérodynamique, monté fixement sur ce dernier. Le capotage aérodynamique, également dit panneau ou élément de carénage aérodynamique, recouvre donc le berceau remplissant quant à lui un rôle structurel de support des capots de soufflante.

Le berceau précité est habituellement monté sur la structure rigide à l'aide de moyens d'accrochage appropriés. Cependant, lorsque l'ensemble moteur est soumis à d'importantes contraintes tel que cela est rencontré durant les phases de décollage et d'atterrissage, ou encore en vol lors de fortes turbulences, la solidarisation du berceau de la structure aérodynamique avant à la structure rigide induit une modification substantielle de la géométrie globale de l'ensemble, et plus spécifiquement de celle de la nacelle. En particulier, il arrive que l'on puisse observer un désaffleurement entre l'entrée d'air de la nacelle accompagnant la déformation du moteur, et les capots de soufflante montés sur ladite structure aérodynamique avant solidaire de la structure rigide du mât d'accrochage, cette structure aérodynamique avant pouvant donc elle aussi se retrouver écartée de la même entrée d'air de nacelle.

Le phénomène observé provoque bien évidemment de la traînée, ce qui nuit aux performances globales de l'aéronef.

Par ailleurs, cette solution consistant à raccorder le berceau sur la structure rigide du mât d'accrochage engendre sa mise en porte-à-faux vers l'avant, ce qui induit des contraintes mécaniques importantes dues à la masse associée.

De plus, il est indiqué qu'un phénomène analogue est également rencontré lorsque le berceau portant fixement le capotage aérodynamique n'est plus monté sur la structure rigide du mât d'accrochage, mais exclusivement sur le carter de soufflante du moteur, solidaire de l'entrée d'air de la nacelle. Dans un tel cas, il arrive alors que l'on puisse observer un désaffleurement entre le capotage aérodynamique de berceau solidaire du carter de soufflante, et les autres carénages aérodynamiques du mât d'accrochage, et en particulier le carénage situé plus vers l'arrière, dit carénage de raccordement.

De plus, lorsque le berceau est monté sur le carter de soufflante du moteur, cela engendre habituellement des difficultés de démonstration de la tenue de la structure aérodynamique avant au phénomène de perte d'aube de soufflante, phénomène également dénommé « Fan Blade Out », en ce sens que la structure aérodynamique avant montée fixement sur le carter de soufflante subit les mêmes accélérations / déplacements que ce dernier. Pour répondre à ces difficultés, il peut alors s'avérer nécessaire d'effectuer des tests de résistance à l'impact d'aube avec le berceau monté sur le carter de soufflante, ce type de tests n'étant cependant actuellement que peu maîtrisé.

D'autre part, avec cette solution technique de montage, une perte d'aube de soufflante peut conduire à des risques importants d'écopage entre la structure aérodynamique avant et l'entrée d'air de la nacelle. En effet, suite à l'impact observé lors d'une perte d'aube, un grand déplacement se propage en quelques millisecondes sur le carter de soufflante. Tous les éléments liés physiquement à ce carter se déplacent donc de la même valeur. Les structures concernées, comme le berceau de la structure aérodynamique avant et l'entrée d'air, doivent absorber ces efforts / grands déplacements, étant par ailleurs noté que des jeux importants sont susceptibles de se créer entre l'entrée d'air et le berceau, et/ou entre l'entrée d'air et un capot de soufflante. Ces mêmes jeux, s'ils ne se referment pas, peuvent s'agrandir très rapidement, et donc entraîner la perte de la structure aérodynamique avant, ainsi que celle des capots de soufflante.

Enfin, toujours lorsque le berceau est monté sur le carter de soufflante du moteur, il est généralement nécessaire de prévoir un système de réglage équipant le berceau, dont le but est d'assurer des jeux et des désaffleurements en adéquation avec les spécifications. Ce système présente les inconvénients d'être à la fois coûteux et encombrant.

### EXPOSÉ DE L'INVENTION

L'invention a donc pour but de proposer un ensemble moteur pour aéronef remédiant aux inconvénients mentionnés ci-dessus, relatifs aux réalisations de l'art antérieur.

Pour ce faire, l'invention a pour objet un ensemble moteur pour aéronef comprenant un moteur, un dispositif d'accrochage du moteur ainsi qu'une nacelle entourant le moteur et pourvue de capots de soufflante ainsi que d'une entrée d'air, ce dispositif d'accrochage comportant une structure rigide ainsi qu'une structure aérodynamique avant, cette dernière présentant un berceau sur lequel les capots de soufflante sont préférentiellement articulés et étant revêtu d'un capotage aérodynamique, le berceau de la structure aérodynamique avant étant équipé de moyens d'accrochage arrière montés sur la structure rigide du dispositif d'accrochage. Selon l'invention, le berceau de la structure aérodynamique avant est de plus équipé de moyens d'accrochage avant montés sur l'entrée d'air.

Par conséquent, l'agencement proposé permet de limiter fortement les effets néfastes de désaffleurement décrits ci-dessus, étant donné que la partie avant du berceau de la structure aérodynamique avant portant de préférence les capots de soufflante peut à présent mieux accompagner les déplacements de l'entrée d'air suivant les déformations du moteur, durant les périodes de fortes sollicitations de l'ensemble.

Ainsi, la jonction affleurante entre l'entrée d'air de la nacelle et les capots de soufflante peut être conservée, ce qui permet de limiter les pertes en traînée rencontrées avec les réalisations de l'art antérieur. A cet égard, les pertes en traînée sont également diminuées par la conservation de la jonction affleurante entre le capotage aérodynamique et les autres carénages aérodynamiques du mât d'accrochage, grâce à la présence des moyens d'accrochage arrière, de même que ces pertes en traînée sont aussi diminuées par la conservation de la jonction affleurante entre le capotage aérodynamique et l'entrée d'air, de par la présence des moyens d'accrochage avant.

De plus, cet agencement particulier permet avantageusement de limiter le porte-à-faux vers l'avant antérieurement rencontré pour le berceau structurel portant les capots de soufflante, puisque celui-ci est à présent équipé de moyens d'accrochage avant montés sur l'entrée d'air de la nacelle.

D'autre part, le berceau n'étant de préférence plus directement monté sur le carter de soufflante du moteur, et de toute façon monté à ses extrémités avant et arrière respectivement sur le mât d'accrochage et sur l'entrée d'air, il n'existe par conséquent plus de difficultés de démonstration de la tenue de la structure aérodynamique avant au phénomène de perte d'aube de soufflante. En effet, on peut considérer que le grand déplacement rencontré par le carter de soufflante, suite à la perte d'une aube, n'induit pas de déplacement sensible sur le berceau.

Par ailleurs, même en cas de perte d'une aube de soufflante, la liaison avant entre le berceau et l'entrée d'air implique que les risques d'écopage entre la structure aérodynamique avant et l'entrée d'air de la nacelle sont fortement diminués, voire réduits à néant.

Enfin, toujours en raison de la présence de la liaison avant entre le berceau et l'entrée d'air, les jeux nécessaires sont grandement réduits, et en partie déportés en aval, entre le carénage du berceau et le mât, dans une région moins sensible aérodynamiquement. Par conséquent, il n'est avantageusement plus nécessaire de prévoir un système de réglage équipant le berceau, contrairement à ce qui était rencontré antérieurement.

De préférence, les moyens d'accrochage avant prennent la forme d'une attache avant conçue de manière à reprendre des efforts s'exerçant selon une direction longitudinale du moteur, selon une direction transversale de ce même moteur, et également selon une direction verticale de ce dernier.

Par ailleurs, les moyens d'accrochage arrière comportent de préférence deux demi-attaches arrière disposées de part et d'autre d'une partie avant de la structure rigide du dispositif d'accrochage, chacune des deux demi-attaches arrière étant conçue de manière à reprendre des efforts s'exerçant selon une direction transversale du moteur et selon une direction verticale de ce dernier, et autorisant chacune un déplacement relatif limité, selon une direction longitudinale du moteur, entre une partie arrière du berceau de la structure aérodynamique avant, et une partie avant de la structure rigide.

En d'autres termes, chacune des deux demi-attaches arrière reprend les efforts s'exerçant selon les directions transversale et verticale, mais pas ceux s'exerçant dans la direction longitudinale selon laquelle les faibles déplacements relatifs entre la partie arrière de la structure aérodynamique avant et la partie avant de la structure rigide peuvent donc être absorbés.

Ainsi, la combinaison de l'attache avant et des deux demi-attaches arrière, constituant l'ensemble des moyens d'accrochage de la structure aérodynamique avant, permet d'obtenir des moyens d'accrochage se rapprochant avantageusement fortement d'un système de montage isostatique.

A titre indicatif, il est noté que dans ce qui précède, il a été fait mention de la reprise des efforts s'exerçant selon des directions transversales et verticales du moteur, par les différentes attaches. Cela s'applique particulièrement lorsque le moteur est destiné à être monté au-dessus de la voilure de l'aéronef ou suspendu au-dessous de celle-ci, et éventuellement aussi dans le cas d'un montage du moteur en partie arrière du fuselage de l'aéronef. Néanmoins, dans ce dernier cas, il se peut que les efforts repris par les attaches ne soient plus orientés transversalement et verticalement par rapport au moteur comme cela a été mentionné ci-dessus, mais respectivement orientés selon une première direction du moteur orthogonale à la direction longitudinale, et selon une seconde direction du moteur orthogonale à la première direction et à la direction longitudinale, chacune de ces première et seconde directions étant alors inclinées par rapport aux directions verticale et transversale du moteur. Naturellement, l'inclinaison précitée des première et seconde directions du moteur est fonction de la géométrie adoptée pour l'ensemble moteur, et de son positionnement par rapport à la partie arrière du fuselage, tel que cela est bien connu de l'homme du métier.

De préférence, les deux demi-attaches arrière sont agencées symétriquement par rapport à un plan médian de l'ensemble, passant par un axe longitudinal du moteur. Ici encore, il est noté que la deuxième direction définissant ce plan est donnée en fonction de la configuration adoptée. A titre d'exemple indicatif, lorsque le moteur est destiné à être monté au-dessus de la voilure de l'aéronef ou suspendu au-dessous de celle-ci, la deuxième direction est généralement la direction verticale du moteur.

Au vu de ce qui précède, il ressort donc que les deux demi-attaches arrière prennent de préférence chacune la forme d'une liaison linéaire annulaire, correspondant à la combinaison d'une liaison rotule et d'une liaison glissière selon la direction longitudinale du moteur.

Dans cet ensemble moteur où la nacelle comporte de façon classique une entrée d'air affleurant les capots de soufflante, et située en avant par rapport à ces derniers, on prévoit préférentiellement que le capotage aérodynamique est monté fixement sur le berceau portant les moyens d'accrochage avant et arrière précités. Le capotage aérodynamique, de préférence uniquement fixé sur son berceau, recouvre donc ce dernier remplissant quant à lui un rôle structurel de support des capots de soufflante, puisque l'ensemble comporte en outre préférentiellement une pluralité d'articulations de capots de soufflante dont au moins certaines d'entre elles sont fixées sur ce même berceau.

A cet égard, on peut par exemple envisager que le berceau porte fixement trois des quatre articulations associées à chaque capot de soufflante, la dernière étant alors montée sur le mât d'accrochage. Alternativement, il serait possible de prévoir une seule des quatre articulations de capot montée sur le berceau, avec les trois autres articulations fixées sur le mât, et ceci afin de limiter au mieux la masse du berceau, et donc les efforts à reprendre par l'entrée d'air. Naturellement, sans sortir du cadre de l'invention, d'autres solutions sont envisageables pour la disposition des articulations, éventuellement montées flottantes pour certaines, c'est-à-dire reliant directement les capots de soufflante droit et gauche de l'ensemble moteur.

Toujours de manière préférentielle, on fait en sorte qu'une partie arrière du berceau soit pénétrée par une partie avant de la structure rigide du dispositif d'accrochage.

Par ailleurs, le dispositif d'accrochage comprend de préférence une pluralité d'attaches moteur parmi lesquelles une attache moteur avant fixée d'une part à la structure rigide, et d'autre part au carter de soufflante du moteur. Dans un tel cas, on prévoit alors de préférence que l'attache moteur avant soit située, dans une direction longitudinale du moteur, entre les moyens d'accrochage avant et arrière du berceau de la structure aérodynamique avant.

De manière préférentielle, le berceau comporte des longerons et des éléments structurels transversaux, tels que des arceaux, raccordés rigidement aux longerons, ces longerons et élément structurels transversaux étant chacun au contact du capotage aérodynamique. De plus, le berceau comporte au moins une bielle de reprise des efforts s'exerçant selon la direction longitudinale du moteur, articulée à ses deux extrémités sur respectivement un élément structurel transversal d'extrémité avant du berceau, et un élément structurel transversal d'extrémité arrière du berceau.

Dans cette configuration où la/les bielles remplissent donc un rôle structurel en combinaison avec les longerons et les éléments transversaux, ladite au moins une bielle comprend deux bielles formant conjointement un V s'ouvrant vers l'arrière, à savoir en direction du mât d'accrochage.

Comme évoqué ci-dessus, le berceau est de préférence dépourvu de liaison mécanique directe avec le moteur, ses seuls moyens d'accrochage sur le reste de l'ensemble moteur étant de ce fait préférentiellement constitués par lesdits moyens d'accrochage avant et arrière.

Enfin, l'invention a également pour objet un aéronef comprenant au moins un ensemble moteur tel que celui décrit ci-dessus, assemblé sur une aile ou sur une partie arrière de fuselage de cet aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un ensemble moteur pour aéronef, selon un mode de réalisation préféré de la présente invention ;
- la figure 2 représente une vue partielle schématique de côté de l'ensemble moteur montré sur la figure 1 ;
- les figures 3 et 4 représentent des vues partielles et détaillées en perspective, prises sous deux angles différents, de l'ensemble moteur montré sur la figure 1 ;
- la figure 5 représente une vue partielle en perspective d'un berceau de support de capots de soufflante pour ensemble moteur, selon un autre mode de réalisation préféré de la présente invention ;
- la figure 6 représente une vue de dessus du berceau montré sur la figure 5 ; et
- la figure 7 représente une vue en perspective d'une partie arrière inférieure du berceau montré sur les figures 5 et 6.

### EXPOSÉ DÉTAILLÉ DE MODES DE RÉALISATION PRÉFÉRÉS

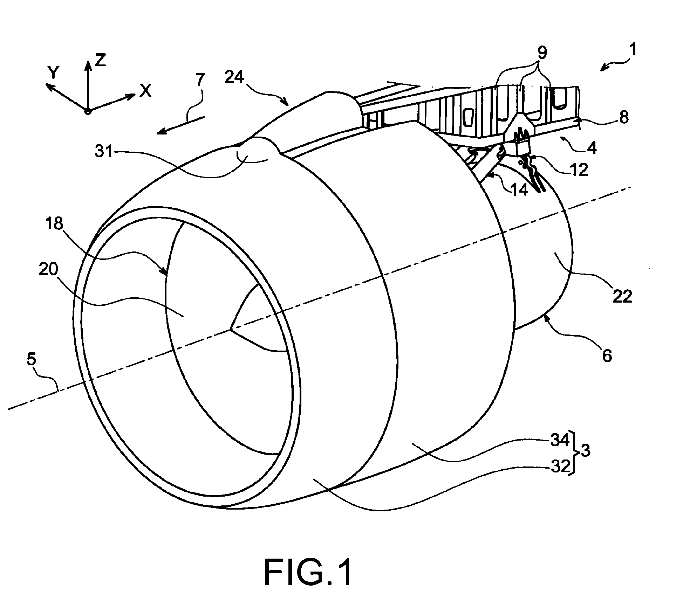

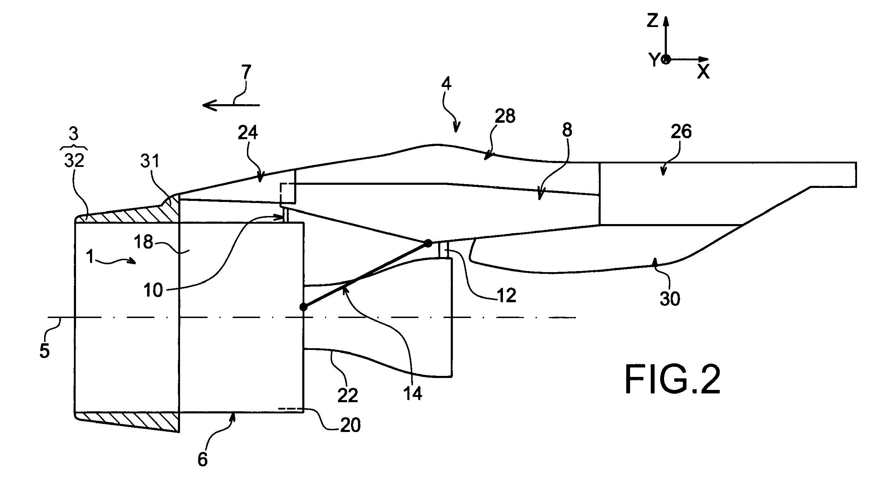

En référence tout d'abord aux figures 1 et 2, on voit un ensemble moteur 1 pour aéronef destiné à être fixé sous une aile de cet aéronef (non représentée), cet ensemble 1 comportant un dispositif d'accrochage 4, un moteur 6 tel qu'un turboréacteur accroché sous ce dispositif 4, et une nacelle 3 dont seule la partie avant a été représentée sur la figure 1.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que le dispositif d'accrochage 4 comporte une autre série d'attaches (non représentées) rapportées sur la structure rigide 8 et permettant d'assurer la suspension de cet ensemble 1 sous la voilure de l'aéronef.

De plus, le dispositif d'accrochage 4 comprend une pluralité de structures secondaires rapportées sur la structure rigide 8. Ces structures secondaires assurant la ségrégation et le maintien des systèmes tout en supportant des éléments de carénage aérodynamique seront décrits ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre, et présentent une jonction habituellement dénommée carter intermédiaire. Enfin, il est précisé que le carter central 22 se prolonge vers l'arrière par un carter dit d'éjection (non référencé).

Comme on peut clairement l'apercevoir sur la figure 1, les attaches moteur 10, 12 du dispositif 4 sont prévues au nombre de deux, et respectivement dénommées attache moteur avant et attache moteur arrière. L'attache moteur avant 10 est préférentiellement interposée entre une partie avant de la structure rigide 8, et une partie supérieure du carter de soufflante 18, également dite partie d'extrémité radiale. Cette attache moteur avant 10 est conçue de manière classique et connue de l'homme du métier, par exemple prévue pour reprendre les efforts s'exerçant dans les trois directions X, Y et Z.

D'autre part, l'attache moteur arrière 12, également réalisée de façon classique et connue de l'homme du métier et pouvant être conçue pour reprendre les efforts s'exerçant dans les directions Y et Z, est quant à elle interposée entre une partie plus arrière de la structure rigide 8, et le carter central 22 ou le carter d'éjection.

Le dispositif 14 de reprise des efforts de poussée générés par le moteur peut quant à lui présenter une forme classique de double bielle chacune disposée d'un côté du moteur 6, l'extrémité avant de chaque bielle étant montée sur une partie arrière du carter de soufflante ou du carter intermédiaire, et l'extrémité arrière étant rapportée sur l'attache moteur arrière 12 ou sur la structure rigide 8 à proximité de cette dernière.

Dans ce mode de réalisation préféré de la présente invention, la structure rigide 8 prend la forme d'un caisson s'étendant de l'avant vers l'arrière, sensiblement selon la direction X.

Le caisson 8 le mieux représenté sur la figure 1 prend alors la forme d'un mât de conception similaire à celle habituellement observée pour les mâts d'accrochage de turboréacteurs, notamment en ce sens qu'il est pourvu de nervures transversales 9 prenant chacune la forme d'un rectangle orienté dans un plan YZ.

En référence plus spécifiquement à la figure 2, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

Globalement, ces structures secondaires sont des éléments classiques identiques ou similaires à ceux rencontrés dans l'art antérieur, et connus de l'homme du métier, à l'exception de la structure aérodynamique avant 24 qui sera décrite en détails ci-après.

Plus précisément, la structure aérodynamique avant 24, qui est la seule à avoir été représentée sur la figure 1 pour des raisons de clarté, est habituellement placée à l'avant de la voilure et légèrement surélevée par rapport à la structure primaire 8 à laquelle elle est fixée. Elle présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de support des capots de soufflante et de carénage aérodynamique, mais permet également la mise en place, la ségrégation et le cheminement de différents systèmes (air, électrique, hydraulique, carburant).

Directement dans le prolongement arrière de cette structure 24, monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, qui contient la majeure partie des équipements hydrauliques. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou « Aft Pylon Fairing ». Ses fonctions essentielles sont la formation d'une barrière anti-feu, et la formation d'une continuité aérodynamique entre la sortie du moteur et le mât d'accrochage.

En référence à présent plus spécifiquement à la figure 1, on peut voir une partie de la nacelle 3 comportant au niveau de son extrémité avant une entrée d'air 32 fixée à l'avant du carter de soufflante 18, cette entrée d'air 32 étant directement suivie vers l'arrière par deux capots de soufflante 34 (un seul visible en raison de la vue en perspective) chacun monté de façon articulée sur la structure aérodynamique secondaire 24 discutée ci-dessus. Bien que cela n'est pas été représenté, il doit être compris que la nacelle 3 de conception classique comporte vers l'arrière d'autres éléments connus de l'homme du métier, tels que des capots d'inverseurs de poussée montés sur la structure rigide 8.

De plus, l'entrée d'air 32 présente au niveau de sa partie arrière supérieure une excroissance aérodynamique 31 se situant dans le prolongement avant de la structure aérodynamique avant 24 du mât. Naturellement, il est recherché à obtenir la meilleure continuité aérodynamique possible entre les éléments jointifs précités 31 et 24, qui s'étendent sensiblement selon la direction X au niveau d'une partie supérieure de l'ensemble moteur 1. Il est à cet égard noté qu'une solution sans excroissance 31 pourrait être adoptée, sans sortir du cadre de l'invention.

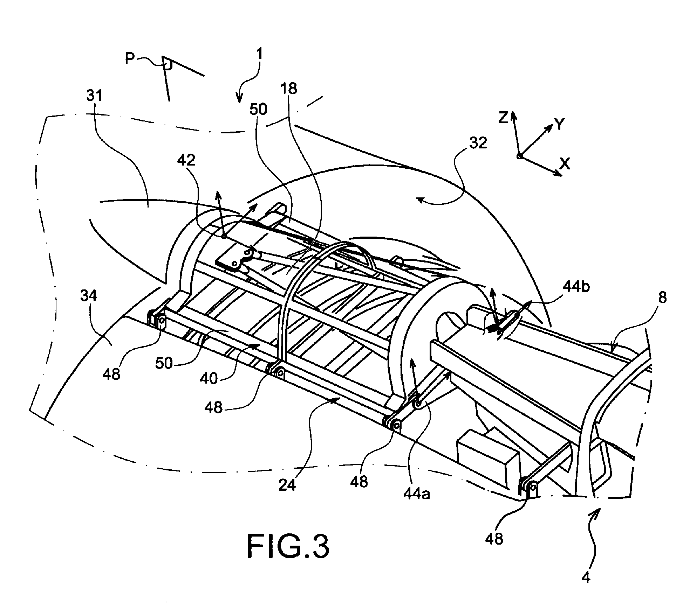

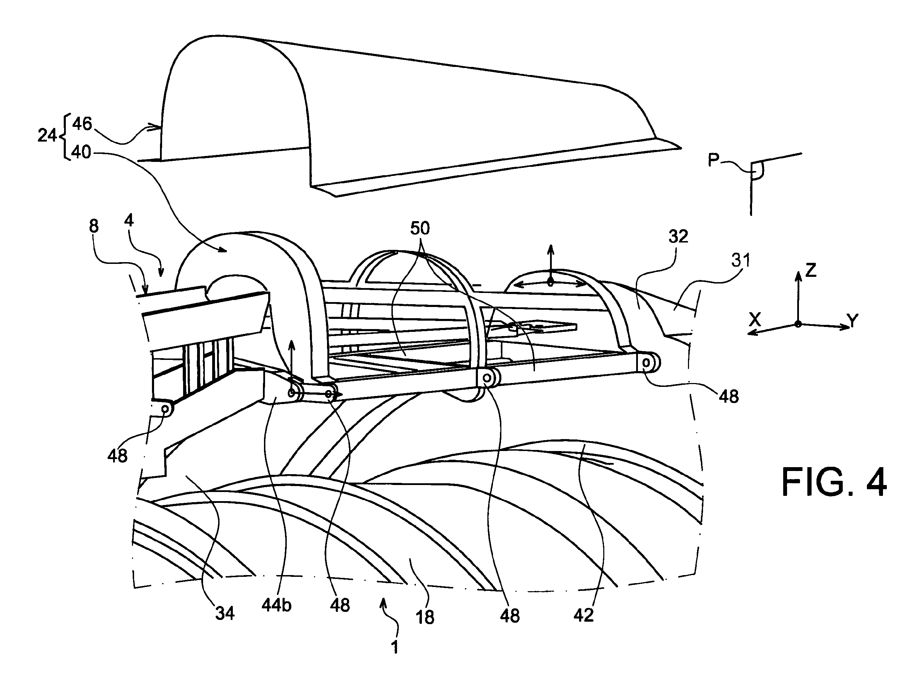

Il va à présent être fait référence conjointement aux figures 3 et 4, détaillant en particulier la structure aérodynamique avant 24 incorporant l'une des particularités de la présente invention.

La structure aérodynamique avant 24 présente un berceau 40 constituant la portion structurale de cet élément, cet élément étant également connu sous l'appellation anglaise « cradle ». Il s'étend globalement au-dessus du carter de soufflante 18, et est constitué d'une façon classique connue de l'homme du métier, à savoir par l'assemblage de longerons s'étendant sensiblement selon la direction X et d'éléments structurels transversaux, du type arceaux s'ouvrant vers le bas, par exemple de forme sensiblement semi-cylindrique comme cela est clairement visible sur les figures 3 et 4.

Sur ces mêmes figures, on peut d'ailleurs apercevoir que la partie avant de la structure rigide 8 du mât d'accrochage 4 pénètre à l'intérieur de ce berceau en traversant au moins le premier arceau de ce même berceau. D'ailleurs, étant donné que l'attache moteur avant 10 précitée est montée au niveau d'une extrémité avant de la structure rigide 8, cela implique que cette attache avant 10 est en partie située au sein d'un espace intérieur délimité par les arceaux du berceau. A cet égard, il est noté que sur les figures 3 et 4, la partie inférieure de l'attache 10 destinée à être rapportée sur le carter de soufflante 18, n'a pas été représentée pour des raisons de clarté.

Pour assurer le montage du berceau 40 sur l'ensemble moteur 1, il est prévu des moyens d'accrochage avant ainsi que des moyens d'accrochage arrière, comme cela va à présent être décrit.

En ce qui concerne les moyens d'accrochage avant, ceux-ci prennent globalement la forme d'une attache avant 42 rapportée au niveau d'une extrémité avant du berceau 40. L'une des particularités de l'invention réside dans le fait que cette attache avant 42 est non seulement solidaire du berceau 40, mais également de l'entrée d'air 32, et plus préférentiellement de son excroissance aérodynamique 31. Néanmoins, cette excroissance 31 pourrait faire partie de la structure 24 et être rapportée fixement sur l'entrée d'air par l'attache 42, sans sortir du cadre de l'invention.

Plus précisément, l'attache avant 42 représentée uniquement schématiquement sur les figures 3 et 4 est donc montée sur l'excroissance 31 et sur une extrémité radiale supérieure de l'arceau du berceau le plus avant. Elle est de préférence conçue de manière à reprendre les efforts s'exerçant selon chacune des directions X, Y et Z du moteur, comme cela est schématisé par les flèches sur les figures 3 et 4. A titre indicatif, cette attache moteur peut être classiquement conçue à l'aide de ferrures et d'axes, tel que cela est bien connu de l'homme du métier. En particulier, elle peut prendre la forme d'une rotule montée de manière telle qu'elle est capable de reprendre les efforts s'exerçant selon les trois directions.

D'autre part, les moyens d'accrochage arrière prennent de préférence la forme de deux demi-attaches arrière disposées de part et d'autre d'une partie avant de la structure rigide 8. Comme on le voit sur les figures 3 et 4, ces deux demi-attaches 44a, 44b sont de préférence situées en arrière par rapport à l'attache moteur avant 10, de sorte que cette dernière se retrouve donc placée, dans la direction X, entre les moyens d'accrochage avant et les moyens d'accrochage arrière de la structure aérodynamique avant 24. Chacune des deux demi-attaches arrière 44a, 44b est de préférence conçue de manière à reprendre des efforts s'exerçant selon les directions Y et Z, mais pas ceux s'exerçant selon la direction X. Ici encore, elles sont conçues d'une façon classique et connue de l'homme du métier, à l'aide d'axes et de ferrures. A titre indicatif, il est noté que chaque demi-attache peut comporter une ferrure s'étendant selon la direction Y et disposant au niveau de son extrémité opposée à celle rapportée sur la structure rigide 8, d'une chape traversée par un axe coopérant également avec une ferrure logée dans ladite chape et rapportée sur le berceau 40. De plus, chacune de ces deux demi-attaches arrière 44a, 44b est alors conçue de manière à autoriser un déplacement relatif limité, selon la direction X, entre la partie arrière de la structure aérodynamique 24 et la partie avant de la structure rigide 8 du mât. Il est indiqué que si les moyens d'accrochage avant sont rapportés au niveau de l'arceau le plus avant du berceau 40, les deux demi-attaches arrière 44a, 44b sont quant à elles rapportées au niveau de l'arceau du berceau 40 le plus arrière, comme cela est clairement visible sur les figures 3 et 4. D'autre part, ces deux demi-attaches sont agencées symétriquement par un plan vertical médian P passant par l'axe longitudinal 5 du moteur, ce plan P constituant globalement un plan de symétrie pour l'ensemble moteur destiné à être rapporté sous la voilure de l'aéronef.

De plus, il est noté que chacune des deux demi-attaches arrière 44a, 44b peut être réalisée sous la forme d'une liaison linéaire annulaire, correspondant à la combinaison d'une liaison rotule de préférence agencée entre la ferrure et l'axe précités de la demi-attache, et d'une liaison glissière selon la direction longitudinale du moteur, à savoir selon la direction de ce même axe.

Le berceau 40, revêtu de façon classique par un capotage aérodynamique 46 de préférence uniquement fixé sur ce même berceau 40 et sur aucun autre élément de l'ensemble, est pourvu d'une pluralité d'articulations de capots de soufflante 34, ces articulations étant de préférence agencées au niveau de chacun des deux longerons latéraux du berceau, disposés de part et d'autre du plan P. Chacun de ces deux longerons 50 porte donc une pluralité d'articulations 48 raccordées à l'un des capots de soufflante 34 de la nacelle, ces articulations 48 portées par chaque longeron 50 pouvant constituer tout ou partie des moyens d'accrochage d'un capot de soufflante donné. Dans l'exemple montré sur les figures 3 et 4, les articulations 48 prévues sur un longeron 50 donné, par exemple prévues au nombre de trois, sont associées à une quatrième articulation 48 située dans le prolongement des trois autres, vers l'arrière de celles-ci, cette quatrième articulation 48 étant effectivement rapportée solidairement sur la partie avant de la structure rigide 8, en arrière des moyens d'accrochage arrière de la structure aérodynamique 24. Naturellement, pour chacun des deux capots de soufflante 34, les articulations 48 prévues sur le berceau 40 et la ou les articulations 48 situées en arrière sur la structure rigide 8, sont prévues pour être agencées selon un même axe d'articulation du capot 34.

Alternativement, il aurait par exemple été possible de fixer trois articulations 48 sur la structure rigide, et une seule sur le berceau, ou encore possible d'adopter toute autre configuration, avec éventuellement une ou plusieurs articulations montées flottantes, libres de toute attache, sans sortir du cadre de l'invention.

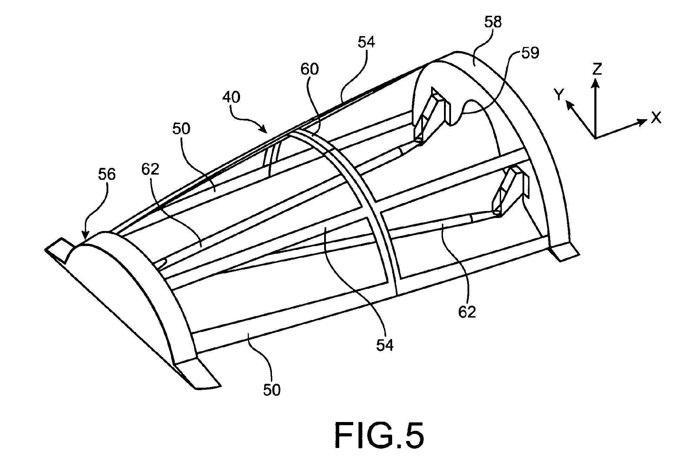

En référence à présent aux figures 5 à 7, on peut apercevoir un berceau 40 se présentant sous la forme d'un autre mode de réalisation préféré de la présente invention. Ainsi, il est à comprendre que le berceau 40 qui va à présent être décrit dispose d'une fonction identique à celle qui vient d'être exposée.

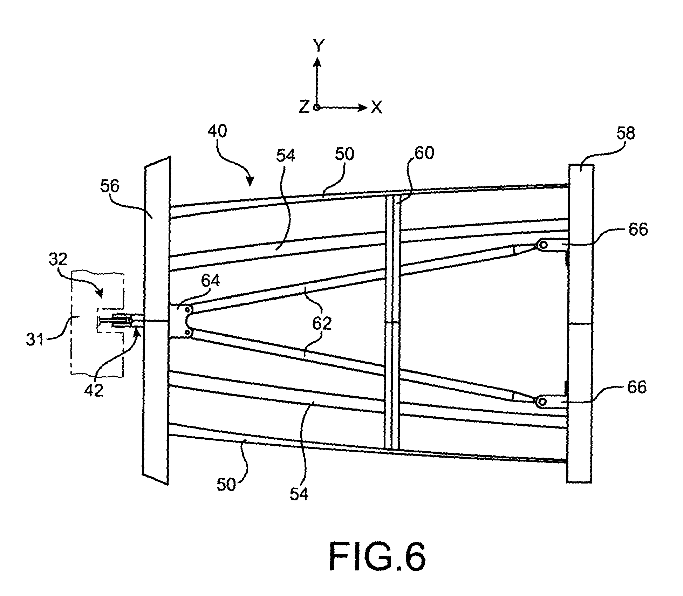

Comme cela est le mieux visible sur les figures 5 et 6, le berceau 40 présente deux longerons latéraux 50 s'étendant d'un bout à l'autre de la longueur du berceau, et disposant d'une fonction de support des articulations de capots de soufflante (non représentées). Par ailleurs, le berceau 40 comprend en outre deux autres longerons 54 situés en vue de dessus entre les deux longerons 50 et s'étendant également d'un bout à l'autre de la longueur du berceau 40. De plus, il est noté que ces quatre longerons 50, 54 sont montés rigidement, par des liaisons du type encastrement, à des éléments structurels transversaux parmi lesquels on compte un élément structurel transversal d'extrémité avant prenant la forme d'une nervure pleine 56 destinée à porter l'attache avant 42, un élément structurel transversal d'extrémité arrière 58 présentant une échancrure 59 autorisant le passage de la partie avant de la structure rigide du mât d'accrochage, et enfin un élément structurel intermédiaire du type arceau 60, ouvert vers le bas.

Ainsi, l'ensemble des éléments précités, à savoir les longerons 50, 54 et les éléments structurels transversaux 56, 58, 60 constituent une surface de support pour le capotage aérodynamique 46 (non représenté), ce dernier étant effectivement destiné à contacter chacun des éléments structurels précités.

Par ailleurs, dans le but d'assurer une transmission satisfaisante des efforts selon la direction X de l'avant vers l'arrière du berceau 40, il est prévu, en plus de la structure de support de carénage aérodynamique, des bielles de reprise 62 s'étendant également de préférence sensiblement d'un bout à l'autre de la longueur du berceau. Néanmoins, ces bielles 62 ne sont pas nécessaires, en particulier lorsque les longerons 50 sont conçus pour supporter les capots de soufflante, comme décrit précédemment. Elles peuvent en revanche devenir utiles lorsque les longerons 50 sont uniquement dimensionnés pour supporter le carénage 46, et non les capots de soufflante, cas effectivement rencontré lorsque le berceau de la structure aérodynamique avant 24 n'a pas pour fonction de supporter ces capots, qui sont alors articulés sur le mât d'accrochage.

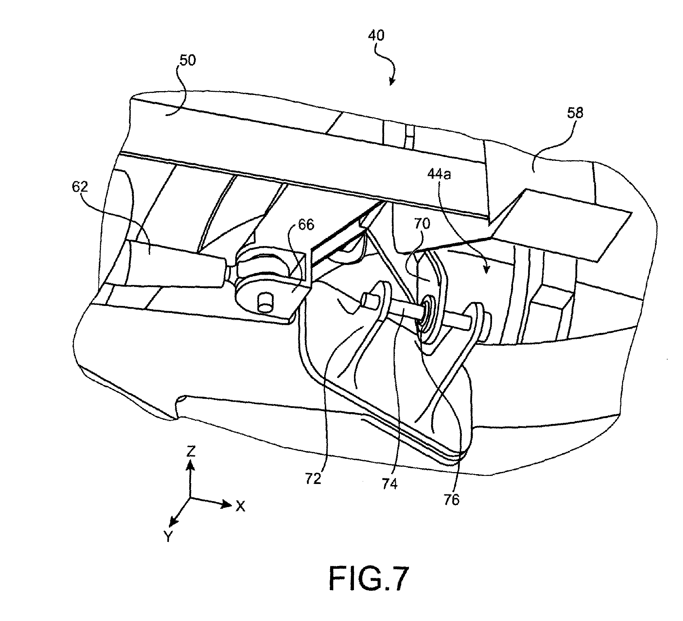

Plus précisément, en référence à la figure 6, il est prévu deux bielles 62 dont l'extrémité avant de chacune d'elle est raccordée de façon articulée à l'élément structurel transversal d'extrémité avant 56, par l'intermédiaire d'une ferrure encastrée 64. Par ailleurs, l'extrémité arrière de chacune des bielles 62 est articulée sur une ferrure 66 solidarisée à l'élément structurel transversal d'extrémité arrière 58. Comme cela est visible sur la figure 7, on peut apercevoir que chaque ferrure 66 peut en réalité prendre la forme d'une chape dans laquelle est introduite l'extrémité arrière de la bielle 62, l'articulation prévue se situant de préférence selon la direction Z, comme cela est également le cas pour l'articulation des extrémités avant des bielles 62.

De nouveau en référence à la figure 6, on peut voir que les deux bielles 62 de reprise des efforts s'exerçant selon la direction X forment conjointement un V s'ouvrant vers l'arrière, la pointe du V étant donc localisée au niveau de la ferrure de raccordement encastrée 64. Enfin, il est indiqué qu'en vue du dessus, les deux bielles 62 sont disposées symétriquement par rapport au plan P précité, et également disposées entre les deux longerons 50, et encore plus préférentiellement entre les deux longerons supérieurs 54.

Sur la figure 7, la demi-attache arrière 44a a été représentée de manière détaillée. Comme évoqué précédemment, celle-ci comprend une ferrure 70 logée entre les deux têtes d'une chape 72, le raccordement entre ces deux éléments 70, 72 étant effectué à l'aide d'un axe de glissière 74 orientée selon la direction X. L'axe de glissière 74 porte une rotule 76 dont la bague extérieure est logée fixement dans un orifice de la ferrure 70 solidaire du berceau 40, et plus précisément de l'élément structurel transversal d'extrémité arrière 58. Ainsi, cette conception traduit bien la réalisation d'une liaison linéaire annulaire, étant donné qu'il s'agit ici d'une combinaison d'une liaison rotule 76, et d'une liaison glissière 74 orientée selon la direction X. A cet égard, il est noté que la différence avec la demi-attache arrière 44a montrée sur la figure 3 réside dans l'écartement des têtes de la chape 72, qui est plus important que celui représenté sur la figure 3. Ainsi, la limitation du déplacement du berceau 40 selon la direction X par rapport à la structure primaire du mât d'accrochage est alors moins importante que celle rencontrée dans le mode de réalisation préféré montré sur la figure 3. Naturellement, il est entendu que l'axe 74 est monté fixement et rigidement sur la chape 72, la liaison glissière désirée étant obtenue par le coulissement de la bague inférieure de la rotule 76 sur ce même axe 74.

Bien entendu, diverses modifications peuvent être apportées par l'homme du métier à l'invention qui vient d'être décrite, uniquement à titre d'exemple non limitatif. A cet égard, on peut notamment indiquer que si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire sur une partie arrière du fuselage de cet aéronef.

## Revendications

1. Ensemble moteur (1) pour aéronef comprenant un moteur (6), un dispositif d'accrochage du moteur (4) ainsi qu'une nacelle entourant le moteur (6) et pourvue de capots de soufflante (34) ainsi que d'une entrée d'air (32), ledit dispositif d'accrochage (4) comportant une structure rigide (8) ainsi qu'une structure aérodynamique avant (24), cette dernière présentant un berceau (40) revêtu d'un capotage aérodynamique (46), ledit berceau (40) étant équipé de moyens d'accrochage arrière (44a, 44b) montés sur la structure rigide (8) du dispositif d'accrochage (4),
**caractérisé en ce que** ledit berceau (40) de la structure aérodynamique avant (24) est de plus équipé de moyens d'accrochage avant (42) montés sur ladite entrée d'air (32).

2. Ensemble moteur (1) selon la revendication 1, **caractérisé en ce que** les moyens d'accrochage avant (42) prennent la forme d'une attache avant conçue de manière à reprendre des efforts s'exerçant selon une direction longitudinale (X) du moteur (6), selon une direction transversale (Y) de ce même moteur, et également selon une direction verticale (Z) de ce dernier.

3. Ensemble moteur (1) selon la revendication 1 ou la revendication 2, **caractérisé en ce que** les moyens d'accrochage arrière comportent deux demi-attaches arrière (44a, 44b) disposées de part et d'autre d'une partie avant de la structure rigide (8) du dispositif d'accrochage (4), chacune des deux demi-attaches arrière étant conçue de manière à reprendre des efforts s'exerçant selon une direction transversale (Y) du moteur (6) et selon une direction verticale (Z) de ce dernier, et autorisant chacune un déplacement relatif limité, selon une direction longitudinale (X) du moteur (6), entre une partie arrière du berceau (40) de ladite structure aérodynamique avant (24) et une partie avant de ladite structure rigide (8).

4. Ensemble moteur (1) selon la revendication 3, **caractérisé en ce que** lesdites deux demi-attaches arrière (44a, 44b) sont agencées symétriquement par rapport à un plan médian (P) de l'ensemble (1), passant par un axe longitudinal (5) du moteur (6).

5. Ensemble moteur (1) selon la revendication 3 ou la revendication 4, **caractérisé en ce que** lesdites deux demi-attaches arrière (44a, 44b) prennent chacune la forme d'une liaison linéaire annulaire.

6. Ensemble moteur (1) selon l'une quelconque des revendications précédentes, **caractérisé en ce que** ladite entrée d'air (32) affleure les capots de soufflante (34), et est située en avant par rapport à ces derniers.

7. Ensemble moteur (1) selon l'une quelconque des revendications précédentes, **caractérisé en ce que** lesdits capots de soufflante sont articulés sur ledit berceau (40), ce dernier portant les moyens d'accrochage avant et arrière (42, 44a, 44b).

8. Ensemble moteur (1) selon l'une quelconque des revendications précédentes, **caractérisé en ce qu'**une partie arrière du berceau (40) est pénétrée par une partie avant de ladite structure rigide (8) du dispositif d'accrochage (4).

9. Ensemble moteur (1) selon l'une quelconque des revendications précédentes, **caractérisé en ce qu'**il comprend une pluralité d'articulations de capots de soufflante (48), au moins certaines de ces articulations étant fixées sur ledit berceau (40).

10. Ensemble moteur (1) selon l'une quelconque des revendications précédentes, **caractérisé en ce que** ledit dispositif d'accrochage (4) comprend de plus une pluralité d'attaches moteur parmi lesquelles une attache moteur avant (10) fixée d'une part à la structure rigide (8), et d'autre part audit carter de soufflante (18) du moteur (6).

11. Ensemble moteur (1) selon la revendication 10, **caractérisé en ce que** ladite attache moteur avant (10) est située, dans une direction longitudinale (X) du moteur (6), entre lesdits moyens d'accrochage avant et arrière du berceau (40) de la structure aérodynamique avant (24).

12. Ensemble moteur (1) selon l'une quelconque des revendications précédentes, **caractérisé en ce que** ledit berceau (40) comporte des longerons (50, 54) et des éléments structurels transversaux (56, 58, 60) raccordés rigidement auxdits longerons, lesdits longerons et élément structurels transversaux étant chacun au contact dudit capotage aérodynamique (46), et **en ce que** ledit berceau (40) comporte également au moins une bielle (62) de reprise des efforts s'exerçant selon une direction longitudinale (X) du moteur, articulée à ses deux extrémités sur respectivement un élément structurel transversal d'extrémité avant (56) du berceau (40), et un élément structurel transversal d'extrémité arrière (58) du berceau (40).

13. Ensemble moteur (1) selon la revendication 12, **caractérisé en ce que** ladite au moins une bielle comprend deux bielles (62, 62) formant conjointement un V s'ouvrant vers l'arrière.

14. Ensemble moteur (1) selon l'une quelconque des revendications précédentes, **caractérisé en ce que** ledit berceau (40) est dépourvu de liaison mécanique directe avec ledit moteur.

15. Aéronef comprenant au moins un ensemble moteur (1) selon l'une quelconque des revendications précédentes, assemblé sur une aile ou sur une partie arrière de fuselage de cet aéronef.

## Claims

1. Engine unit (1) for aircraft comprising an engine (6), a device for hooking the engine (4) as well as a nacelle surrounding the engine (6) and provided with fan cowls (34) as well as an air inlet (32), said device for hooking (4) comprising a rigid structure (8) as well as a front aerodynamic structure (24), the latter having a cradle (40) covered with an aerodynamic fairing (46), said cradle (40) being provided with rear means of hooking (44a, 44b) mounted on the rigid structure (8) of the device for hooking (4),
**characterised in that** said cradle (40) of the front aerodynamic structure (24) is in addition provided with front means of hooking (42) mounted on said air inlet (32).

2. Engine unit (1) according to claim 1, **characterised in that** the front means of hooking (42) take the form of a front fastener designed in such a way as to absorb the loads that are exerted according to a longitudinal direction (X) of the engine (6), according to a transversal direction (Y) of this same engine, and also according to a vertical direction (Z) of the latter.

3. Engine unit (1) according to claim 1 or claim 2, **characterised in that** the rear means of hooking comprise two rear half-fasteners (44a, 44b) arranged on either side of a front portion of the rigid structure (8) of the device for hooking (4), each of the two rear half-fasteners being designed in such a way as to absorb the loads that are exerted according to a transversal direction (Y) of the engine (6) and according to a vertical direction (Z) of the latter, and authorising each one a limited relative displacement, according to a longitudinal direction (X) of the engine (6), between a rear portion of the cradle (40) of said front aerodynamic structure (24) and a front portion of said rigid structure (8).

4. Engine unit (1) according to claim 3, **characterised in that** said two rear half-fasteners (44a, 44b) are arranged symmetrically in relation to a median plane (P) of the unit (1), passing through a longitudinal axis (5) of the engine (6).

5. Engine unit (1) according to claim 3 or claim 4, **characterised in that** said two rear half-fasteners (44a, 44b) each take the form of an annular linear joint.

6. Engine unit (1) according to any of the preceding claims, **characterised in that** said air inlet (32) is flush against the fan cowls (34), and is located in the front in relation to the latter.

7. Engine unit (1) according to any of the preceding claims, **characterised in that** said fan cowls are articulated around said cradle (40), the latter carrying the front and rear means of hooking (42, 44a, 44b).

8. Engine unit (1) according to any of the preceding claims, **characterised in that** a rear portion of the cradle (40) is penetrated by a front portion of said rigid structure (8) of the device for hooking (4).

9. Engine unit (1) according to any of the preceding claims, **characterised in that** it comprises a plurality of articulations of fan cowls (48), with at least some of these articulations being fixed on said cradle (40).

10. Engine unit (1) according to any of the preceding claims, **characterised in that** said device for hooking (4) comprises in addition a plurality of engine fasteners among which a front engine fastener (10) fixed on the one hand to the rigid structure (8), and on the other hand to said fan case (18) of the engine (6).

11. Engine unit (1) according to claim 10, **characterised in that** said front engine fastener (10) is located, in a longitudinal direction (X) of the engine (6), between said front and rear means of hooking of the cradle (40) of the front aerodynamic structure (24).

12. Engine unit (1) according to any of the preceding claims, **characterised in that** said cradle (40) comprises spars (50, 54) and transversal structural elements (56, 58, 60) connected rigidly to said spars, said spars and transversal structural elements each being in contact with said aerodynamic fairing (46), and **in that** said cradle (40) further comprises at least one link rod (62) for absorbing loads that are exerted in a longitudinal direction (X) of the engine, articulated at its two ends on respectively a front end transversal structural element (56) of the cradle (40), and a rear end transversal structural element (58) of the cradle (40).

13. Engine unit (1) according to claim 12, **characterised in that** said at least one link rod comprises two link rods (62, 62) forming together a V opening towards the rear.

14. Engine unit (1) according to any of the preceding claims, **characterised in that** said cradle (40) is devoid of direct mechanical joint with said engine.

15. Aircraft comprising at least one engine unit (1) according to any of the preceding claims, assembled on a wing or on a rear portion of the fuselage of this aircraft.

## Patentansprüche

1. Triebwerkanordnung (1) für ein Luftfahrzeug, umfassend ein Triebwerk (6), eine Triebwerks-Aufhängungsvorrichtung (4) sowie eine Gondel, die das Triebwerk (6) umschließt und Fanverkleidungen (34) sowie einen Lufteinlass (32) aufweist, wobei die Aufhängungsvorrichtung (4) eine starre Struktur (8) sowie eine vordere aerodynamische Struktur (24) umfasst, wobei diese letztere ein Traggestell (40) aufweist, das mit einer aerodynamischen Verschalung (46) verkleidet ist, wobei das Traggestell (40) mit hinteren Aufhängemitteln (44a, 44b), die an der starren Struktur (8) der Aufhängungsvorrichtung (4) angebracht sind, ausgestattet ist,
**dadurch gekennzeichnet, dass** das Traggestell (40) der vorderen aerodynamischen Struktur (24) ferner mit vorderen Aufhängemitteln (42) ausgestattet ist, die an dem Lufteinlass (32) angebracht sind.

2. Triebwerkanordnung (1) nach Anspruch 1, **dadurch gekennzeichnet, dass** die vorderen Aufhängemittel (42) die Form einer vorderen Aufhängung aufweisen, die zur Aufnahme von Kräften, die in einer Längsrichtung (X) des Triebwerks (6), in einer Transversalrichtung (Y) dieses Triebwerks und auch in einer Vertikalrichtung (Z) dieses letzteren auftreten, gestaltet ist.

3. Triebwerkanordnung (1) nach Anspruch lader Anspruch 2, **dadurch gekennzeichnet, dass** die hinteren Aufhängemittel zwei hintere Halbaufhängungen (44a, 44b) umfassen, die sich beiderseits einer vorderen Partie der starren Struktur (8) der Aufhängungsvorrichtung (4) befinden, wobei die zwei hinteren Halbaufhängungen jeweils zur Aufnahme von Kräften, die in einer Transversalrichtung (Y) des Triebwerks (6) und in einer Vertikalrichtung (Z) des letzteren auftreten, gestaltet sind, und jeweils eine beschränkte relative Verschiebung in einer Längsrichtung (X) des Triebwerks (6) zwischen einer hinteren Partie des Traggestells (40) der vorderen aerodynamischen Struktur (24) und einer vorderen Partie der starren Struktur (8) zulassen.

4. Triebwerkanordnung (1) nach Anspruch 3, **dadurch gekennzeichnet, dass** die zwei hinteren Halbaufhängungen (44a, 44b) in Bezug auf eine Mittelebene (P) der Anordnung (1), die durch eine Längsachse (5) des Triebwerks (6) geht, symmetrisch angeordnet sind.

5. Triebwerkanordnung (1) nach Anspruch 3 oder Anspruch 4, **dadurch gekennzeichnet, dass** die zwei hinteren Halbaufhängungen (44a, 44b) jeweils die Form einer linearen ringförmigen Verbindung zeigen.

6. Triebwerkanordnung (1) nach einem der vorhergehenden Ansprüche, **dadurch gekennzeichnet, dass** der Lufteinlass (32) mit den Fanverkleidungen (34) fluchtet und sich in Bezug auf diese letzteren vorne befindet.

7. Triebwerkanordnung (1) nach einem der vorhergehenden Ansprüche, **dadurch gekennzeichnet, dass** die Fanverkleidungen beweglich mit dem Traggestell (40) verbunden sind, wobei dieses letztere vordere und hintere Aufhängemittel (42, 44a, 44b) trägt.

8. Triebwerkanordnung (1) nach einem der vorhergehenden Ansprüche, **dadurch gekennzeichnet, dass** eine vordere Partie der starren Struktur (8) der Aufhängungsvorrichtung (4) sich in eine hintere Partie des Traggestells (40) erstreckt.

9. Triebwerkanordnung (1), nach einem der vorhergehenden Ansprüche, **dadurch gekennzeichnet, dass** sie mehrere Fanverkleidungsgelenke (48) umfasst, wobei zumindest einige dieser Gelenke an dem Traggestell (40) befestigt sind.

10. Triebwerkanordnung (1) nach einem der vorhergehenden Ansprüche, **dadurch gekennzeichnet, dass** die Aufhängungsvorrichnung (4) ferner mehrere Triebwerkaufhängungen umfasst, von denen eine vordere Triebwerkaufhängung (10) einerseits an der starren Struktur (8) und andererseits an dem Fangehäuse (18) des Triebwerks (6) befestigt ist.

11. Triebwerkanordnung (1) nach Anspruch 10, **dadurch gekennzeichnet, dass** sich die vordere Triebwerkaufhängung (10) in einer Längsrichtung (X) des Triebwerks (6) zwischen den vorderen und hinteren Aufhängungsvorrichtungen des Traggestells (40) der vorderen aerodynamischen Struktur (24) befindet.

12. Triebwerkanordnung (1) nach einem der vorhergehenden Ansprüche, **dadurch gekennzeichnet, dass** das Traggestell (40) Längsträger (50, 54) und Querstrukturelemente (56, 58, 60), die starr an den Längsträgern angebracht sind, aufweist, wobei die Längsträger und die Querstrukturelemente jeweils mit der aerodynamischen Verschalung (46) in Kontakt sind, und das Traggestell (40) auch mindestens eine Stange (62) zur Aufnahme von in einer Längsrichtung (X) des Triebwerks auftretenden Kräften aufweist, die an ihren beiden Enden beweglich mit einem Querstrukturelement am vorderen Ende (56) des Traggestells (40) bzw. einem Querstrukturelement am hinteren Ende (58) des Traggestells (40) beweglich verbunden ist.

13. Triebwerkanordnung (1) nach Anspruch 12, **dadurch gekennzeichnet, dass** die mindestens eine Stange zwei Stangen (62, 62) umfaßt, die zusammen ein sich nach hinten öffnendes V bilden.

14. Triebwerkanordnung (1) nach einem der vorhergehenden Ansprüche, **dadurch gekennzeichnet, dass** das Traggestell (40) keine direkte mechanische Verbindung mit dem Triebwerk aufweist.

15. Luftfahrzeug, umfassend mindestens eine Triebwerkanordnung (1) nach einem der vorhergehenden Ansprüche, die an einem Tragflügel oder einer hinteren Partie des Rumpfes dieses Luftfahrzeugs angebracht ist.
